# EUROPEAN PATENT SPECIFICATION

(11) **EP 4 272 985 B1**
(45) Date of publication and mention of the grant of the patent: **20.11.2024**
(21) Application number: 23171915.4
(22) Date of filing: 05.05.2023
(51) Int. Cl.: B60K 1/04

(54) **PACKAGING SPACEBOX FOR FUEL CELLS**
VERPACKUNGSRAUMDOSE FÜR BRENNSTOFFZELLEN
BOÎTE D'EMBALLAGE POUR PILES À COMBUSTIBLE

(30) Priority: 05.05.2022 NL 2031785
(43) Date of publication of application: 08.11.2023
(73) Proprietor: DAF Trucks N.V., 5643 TW Eindhoven (NL)
(72) Inventor: VAN DER KNAAP, Albertus Clemens Maria, 5643 TW Eindhoven (NL); DINGEMANS, Cornelis Petrus Adrianus, 5643 TW Eindhoven (NL); WEIJENBORG, Bernardus Johannes Maria, 5643 TW Eindhoven (NL); KRAMER, Pieter Johannes, 5643 TW Eindhoven (NL)
(74) Representative: V.O.

(56) References cited:
- US-A1- 2021 155 224
- US-A1- 2022 105 791
- US-B1- 10 589 788

## Description

### BACKGROUND OF THE INVENTION

The invention relates to vehicles with alternative fuel sources, in particular vehicles using pressurised fuel sources such as hydrogen gas, liquid hydrogen or other fuels in gas or liquid form.

Of particular interest are heavy load vehicles such as trucks. Trucks in general are used to transport heavy loads over long distances. Particularly in case of heavy duty long applications so-called tractor semi-trailer combinations are used in which the tractor vehicle pulls and partly supports the payload that is packed onto the semi-trailer.

The long travelling distances with a target of more than 500 km, of these typical long haulage tractor semi-trailer combinations require large amounts of fuel on board of the vehicle. Especially when alternative fuel sources are used such as hydrogen, the ability to carry sufficient quantities of fuel becomes even more important due to the fairly poor volumetric energy density in comparison to conventional fossil fuels (like diesel). Even more challenging becomes a layout wherein sufficient power is available, for extended periods of time, for a long-haul truck or tractor semi-trailer combination comprising an electrical driveline, an electric energy storage battery system, a hydrogen storage system and a plurality of fuel cell devices US 2022/105791 A1 discloses a truck with an electric driveline, battery and hydrogen storage systems and fuel cell devices.

To increase the volumetric energy density of these hydrogen based fuels normally gaseous hydrogen is pressurized and put into robust thick walled cylindrical container units that can withstand these high internal pressures. Pressure ranges typically from several bars in cryogenic conditions, to about 350-700 bar for storage at room temperature. To minimize the weight penalty of a firm and heavy high pressure resistant tank construction so called class IV carbon fibre reinforced plastic tanks are applied. These cylindrically shaped plastic tanks provide a new challenge for the commercial vehicle manufacturing industry to install these tank units on their trucks as replacement for the well-known rectangular sheet metal manufactured ambient pressure filled diesel tanks in the quest to offer sufficient driving range without the need for intermediate refuelling stops at gasoline shops (with currently lacking refuelling infrastructure). These large volume hydrogen tank units are typically placed left and right of the chassis (in between the front and rear wheels) and behind the cabin wall (in front of the semi-trailer). As a consequence only the remaining space in between and below the chassis rails is available to accommodate the electrical driveline, an electric energy storage battery system and a plurality of fuel cell devices.

Fuel cell devices are typically designed as complete charge generating systems, wherein, additional to one or more charge generating portions, also referred to as fuel cell stacks; one or more auxiliary portions to control hydrogen and air flow to the generating portion, also referred to as Balance-of-Plant (BOP), are provided. Such auxiliary portions at least comprise pump units, and air compressor and cooling units, to keep the fuel cell in a proper conditioned form as well as DC-DC converters to connect the fuel cell stack to the high voltage battery system to compensate this electrical interconnection for voltage differences and fluctuations in the actual fuel cell generating portion. The fuel cells may well be sensitive to acceleration impact, which could damage the charge generating portions, in particular the membrane and/or auxiliary portions when not specifically designed for the harsh vehicle environment of a vibrating truck chassis. In addition, due to the charge generating process, substantial packaging space is needed in order to allow for generating electric output power of at least 150 kW; and preferably even multiples thereof, up to even 800 kW. This poses challenges for proper packaging of fuel cells in vicinity of a large volume hydrogen storage.

It is an objective of the claimed invention to solve one or more problems faced in the state of the art.

### SUMMARY OF THE INVENTION

According to the invention, a truck or tractor semi-trailer combination comprises an electrical driveline, an electric energy storage battery system, hydrogen storage system and a plurality of fuel cell devices. Each fuel cell device comprises a charge generating portion; and one or more auxiliary portions auxiliary to the charge generating portion. The truck is provided with a pair of elongated chassis beams extending along the length of the truck, wherein a storage space is defined between the chassis beams; a front side bridge member laterally extending across the chassis beams; and a rear side cross beam. At least one storage unit is provided that houses a fuel cell device, comprising one or more mounts for suspending said storage unit relative to the chassis beams. The storage unit further comprises an interface module for coupling an air supply duct, an hydrogen supply duct and a water drain duct. The storage unit has a top part extending between the chassis beams in said storage space; and a bottom part extending below the chassis beams and extending at least on one side laterally across the chassis beams.

The invention will further be elucidated by description of some specific embodiments thereof, making reference to the attached drawings. The detailed description provides examples of possible implementations of the invention, but is not to be regarded as describing the only embodiments falling under the scope. The scope of the invention is defined in the claims, and the description is to be regarded as illustrative without being restrictive on the invention.

### BRIEF DESCRIPTION OF FIGURES

Figure 1 (A - B) shows a top view and a perspective view of an embodiment of the invention implemented in a heavy duty 4x2 tractor.
Figure 2 (A - B) shows a storage unit for storage of fuel cells according to an embodiment of the invention.
Figure 3 shows a detail of a bracket system for mounting the storage unit into a chassis according to an embodiment of the invention.
Figure 4 (A - B - C) shows three different assembly variants to accommodate fuel cell components into the storage unit according to an embodiment of the invention.
Figure 5 (A - B) shows perspective views of an air intake duct channel extending to the front of the truck and water exhaust duct extending to the top of the truck, both interfaced at the front plane (in the top end between the chassis members) of the storage unit according to an embodiment of the invention.
Figure 6 shows a view of a truck wherein the water exhaust extends along upstanding vessels.

### DETAILED DESCRIPTION

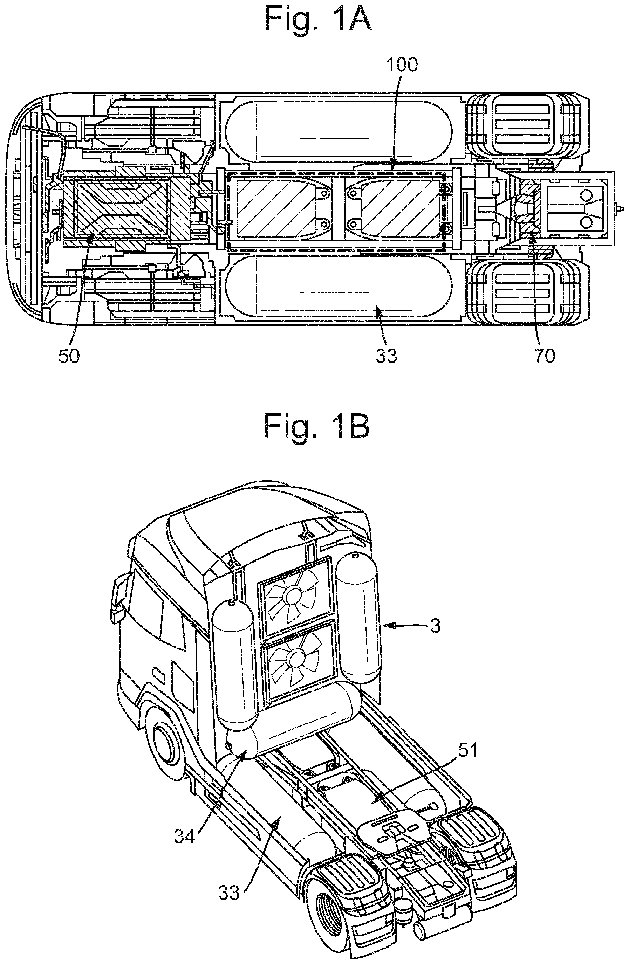

Figure 1 shows a realistic embodiment of a truck (or tractor), wherein a storage space 100 is defined between the chassis beams; a front side bridge member laterally extending across the chassis beams; and a rear side cross beam an additional elongated pressure vessel 34 is oriented in horizontal position adjacent the at least one pressure vessel 3 in upstanding position and in near vicinity of the projected fifth wheel location; above the chassis members. The position of the pressure vessels is beneficial due to the efficient use of space, but not mandatory; other spaces may be suitable. A pressure vessel 34 is preferably located below on a (projected) bottom of the semi-trailer at the vertical location of the fifth wheel and above the tractor chassis members. Furthermore, additional elongated pressure vessels 33, for reaching a driving range of more than 800 km or more, are provided in the bottom framework (or chassis) of the tractor, in particular, in a space provided between front and rear wheels and at the outside (in parallel to the longitudinal centreline of the tractor) where normally, in conventional combustion engine driven trucks, the diesel tanks and the exhaust aftertreatment system are installed. A battery pack 50, that realistically weighs at least about 500 - 1500 kgs, may preferably be placed with its gravity centre on or near the front axle, as this is considered to be the heaviest component (highest gravimetric density) in a fuel cell electric vehicle to allow for more payload carry ability of the rear axle. Note that the maximum axle loads are legally bounded (e.g. rear axle 11,5 ton and front axle 7,5 ton as an average indication for European countries). The center space in the bottom of the tractor and in the middle between the chassis members may be used for housing fuel cell systems 51, where normally, in conventional trucks, central drive shafts or trains may be housed. In the proposed solution according to Figure 1 the electric motors that drive the truck may be arranged as a so-called e-axle 70 (having the electric motors directly integrated in the rigid rear axle advantageously eliminating the need for a central driveshaft and differential gear system with a complex angle transmission), advantageously making packaging space available to place the fuel cells in the middle of the chassis.

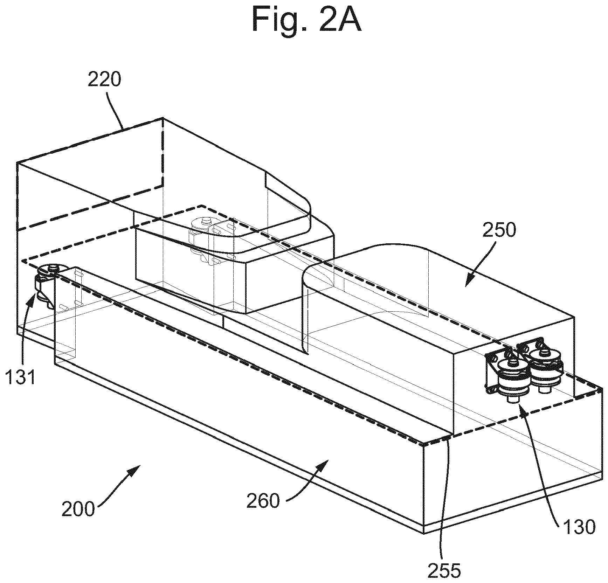

In more detail, FIG 2A shows a storage unit 200 provided in the storage space indicated in FIG 1A. The storage unit houses a fuel cell device (not shown) and comprises one or more mounts 130 for suspending said storage unit relative to the chassis beams 20. The storage unit 200 further comprises an interface module 220 e.g. for coupling an air supply duct, an hydrogen supply duct and a water drain duct (see subsequent figures). A virtual plane 255 divides a top part 250 extending between the chassis beams 20 in said storage space 100; and a bottom part 260 extending below the chassis beams and extending at least on one side laterally across the chassis beams 20.

Depending on the configuration of cross beams 220, 221 and/or bridge members 230, storage unit 200 may be suspended on each side in length direction to one or more of these cross beams.

In the alternative, Fig 2A shows storage unit 200 provided extending underneath a middle cross beam 221 (in the art known as K-cross member).

In an advantageous configuration four mounts are arranged to carry said storage unit, having two front mounts 131 in an extended lateral position on a storage unit front side, and two rear mounts 130 in an adjacent position on a storage unit rear side. The two front mounts 130 at the adjacent rear side position are preferably placed close to each other (short lateral distance) to mimic the functionality of a so-called three point suspension advantageously absorbing chassis torsional flex deformation without dynamically loading these mounts. Having the two mounts at the front side of the storage box at large lateral inter distance contributes to reduced relative twist angles between local rigid chassis structure the storage box at this front end location. The latter is beneficial to relieve the impact on the flexible interfacing channel work at the front end (e.g. air intake, water drain and hydrogen feed ducts) In a further advantageous embodiment, the storage unit is elastically suspended with a heave, pitch and roll eigenfrequency that is tuned to be distinct of the primary eigenfrequency typically ranging between 10 and 17 Hz of the rear axle unsprung mass. This can for example be achieved by a ratio of the axial stiffness and the lateral stiffness is more than 5, preferably more than 8, or even in a range of 10-30. In the alternative, depending on the weight of the storage box, in relation to the stiffness of the mounts, a fairly rigid mounting structure of the hydrogen vessels may be placed behind the cabin, being close the front end of the storage box. This can be advantageous for relatively heavy storage box weights, e.g. exceeding 600 kg, so that the risk of picking up vibrations from the unsprung mass are low if a stiff mount is used, with stiffness eg. higher than 8000 N/mm in the front. This improves mounting characteristics for mounting the air supply, hydrogen supply and water drain. Conversely, the rear end of the storage box may be mounted with a stiffness that is relatively lower, e.g. lower than 8000 N/mm, in particular between 3000 and 8000 N/mm to accommodate some torsional and vertical vibration. This has an advantage that a very stable interface can be provided for the storage box and while having a low vibrational impact.

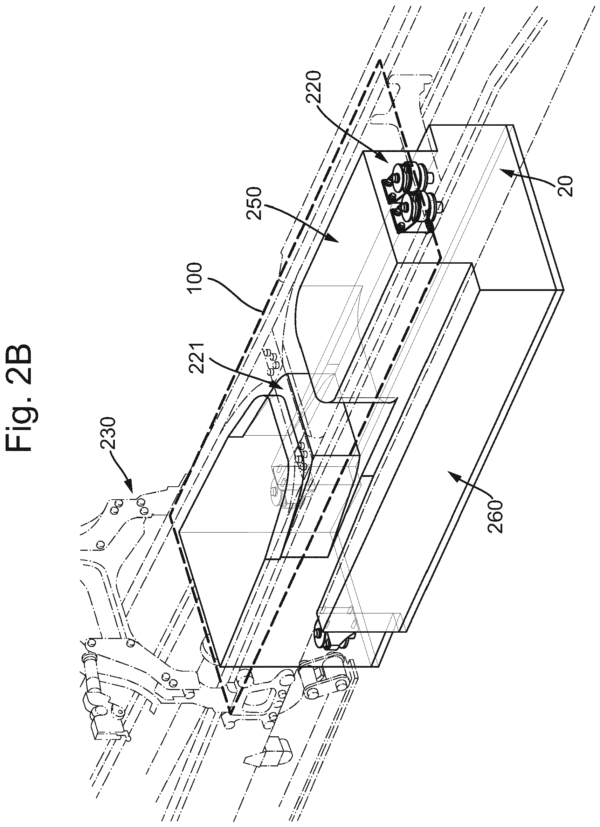

A single integrated double suspension mount provides an advantage that impact of the rear wheels is only partly translated in a torsional rotational movement of the storage unit 200 along an axis that aligns with the vehicles length direction. By having on each side a double suspension, risk of mounting failure is minimized (as opposed to a single mount), reduces the complexity and costs of said mounts as they can manufactured identical and the loads per mounts are reduced advantageously limiting the design volumes of these units. By having on the front side two mounts at an extended lateral position, chassis torsion between chassis members 20 and the storage unit 200 can be minimized, which is beneficial for the position of the depicted interface module 220, that benefits from a stable connection between the storage unit 200 and corresponding coupling of an air supply duct, an hydrogen supply duct and a water drain duct to the storage unit 200. In a further advantageous configuration, all mounts are provided on the interior of the storage space, that means, not extending at least not laterally, to provide room for horizontal hydrogen vessels 33 (see FIG 1). While the bridge member 230 shown in Fig 2 is different from disclosed cross beams 220, 221 a bridge member may also be formed by a cross beam, as long as it provides a lateral connection between the chassis beams 20. Furthermore, the rear suspension cross member 220 may be part of a larger structure, e.g. a suspension structure for the rear axle.

It is noted that the storage unit 200 may be formed extending into said storage space 100 with an L-shape or an inverted T-shape. A T-shape has the advantage of a greater energy generating volume in the space 260 underneath the chassis beams 20; while a L-shape (effectively using only one lateral extending side underneath the chassis beams 20) may provide for additional air ducts sideways connecting to the storage unit, or additional high voltage cabling or other tubing that needs to be guided alongside the storage units 200.

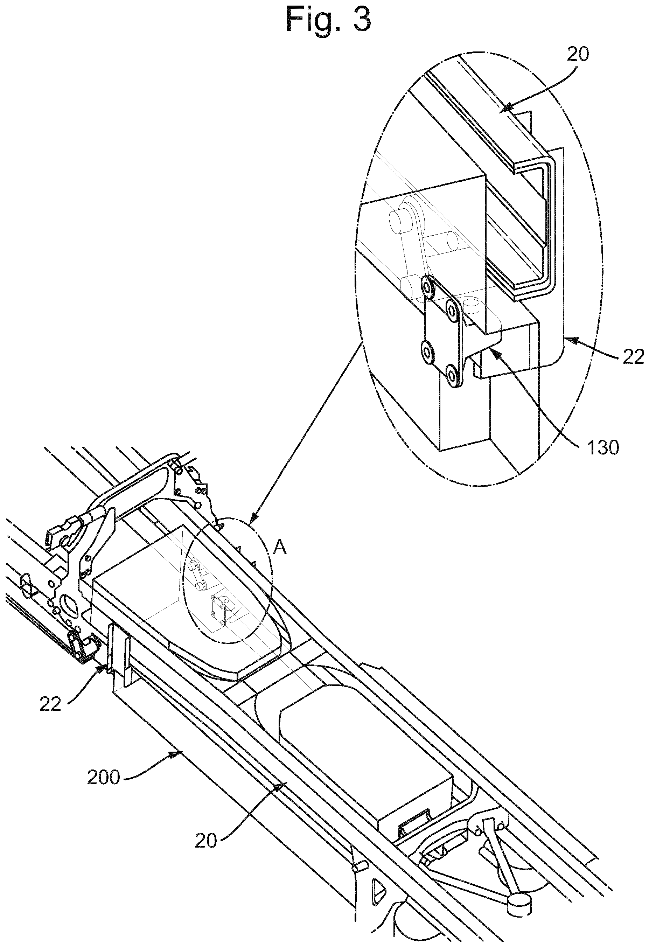

Figure 3 shows an alternative mount structure, with L-shaped brackets 22 mounted to the chassis beams 20. Section A is shown partly enlarged and rotated, so that it is visible that front mounts 131 are supported on a bottom leg of the L-shaped bracket 22 to carry the weight of the storage unit 200 acting on said mounts 131 (in closed form manner opposing of gravity). This has the advantage that the storage unit 200 is still supported by the L-shaped bracket 22 in an inadverted event of failure of the mount 130, such as loosening of the fixation bolts. The storage unit 200 can be efficiently removed by removing the L-shaped brackets 22 from the chassis beams 22 and lowering the storage unit 200. Furthermore the structure does not have protruding elements that could interfere with system components (e.g. battery elements or hydrogen tanks) mounted lateral to the storage unit 200.

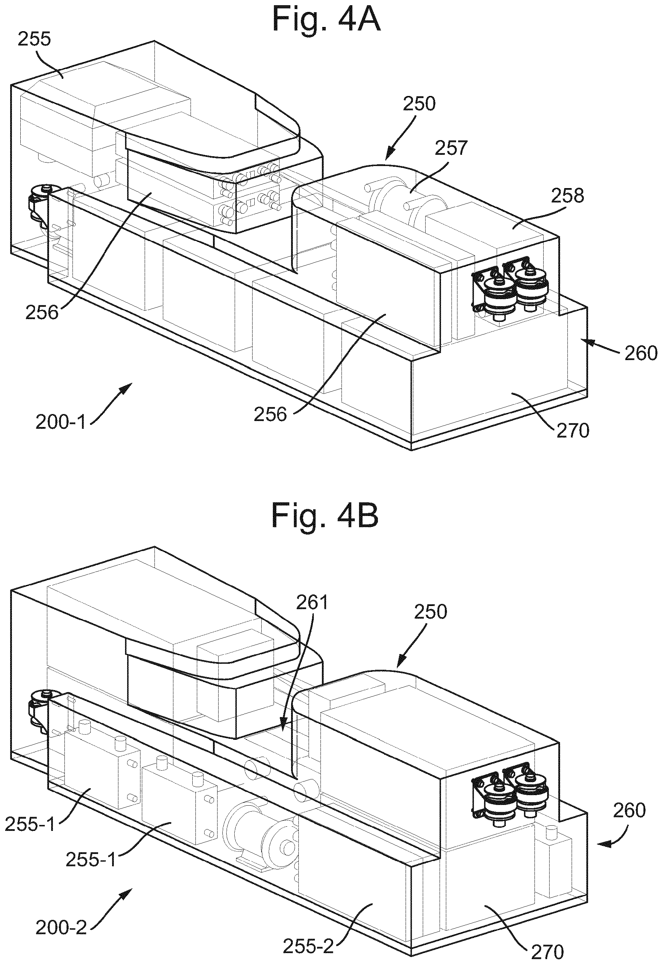

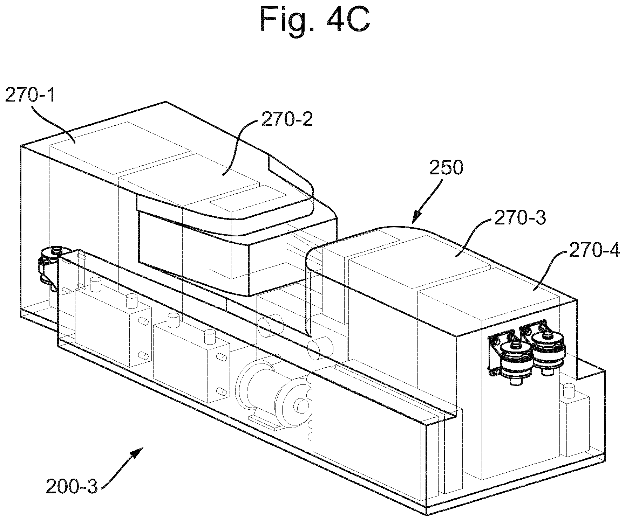

Figure 4 shows several configuration layouts for the storage unit 200-1, 200-2, 200-3.

In FIG 4A, storage unit 200-1 comprises at least one auxiliary fuel cell portion 255 shaped to at least extend partly in the storage unit top part 250, and wherein one or more charge generating portions 270, also known as fuel cell stacks are provided in the storage unit bottom part 260. The auxiliary fuel cell portion is also known as the balance of plant (BOP) and typically comprises water pumps, inverters, control units, humidifier, etc. Additionally are show DC-DC converters 256, air compressor 257 and intercooler 258 as exemplary components of the auxiliary fuel cell portion 255. By way of example, Fig 4A houses a 4 x 75 kW Fuel Cell stack 270 in the lower part 260 that extend laterally across chassis beams 20. An advantage of this configuration is that the fuel stacks can be reached in by supply and drain tubing (hydrogen, air, water) in the top part 250 fairly conveniently.

In Fig 4B, storage unit 200-2 comprises at least one charge generating portion (fuel cell stack) 270 shaped to at least extend partly in the storage unit top part 250. The auxiliary portions 255-1, 255-2 are provided at least on one side of the charge generating fuel cell portion 270 in the storage unit bottom part 260.

In the shown example, the fuel cell stack 270 is formed by two stacked fuel cells, one of them extending between the chassis beams (not shown); and two additional stacked cells on opposite sides of a storage space portion 261 extending underneath a further central cross beam.

In Figure 4C a stack 270-1..4 extends in the length direction of the vehicle, with each fuel cell extending in the storage unit top part 250.

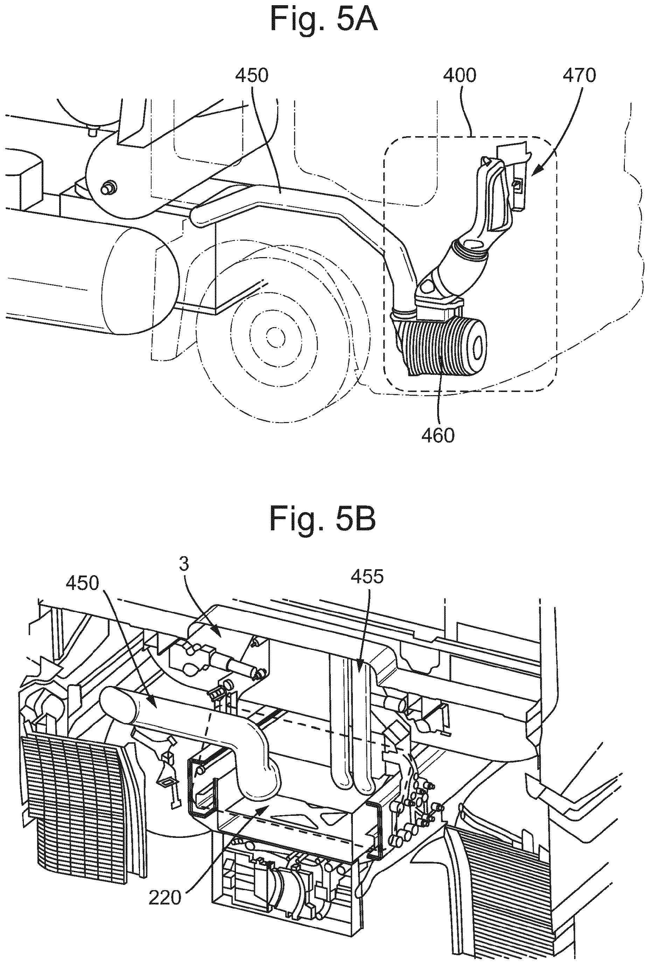

Figure 5 in more details shows an exemplary arrangement where it becomes clear how the interface module, provided on a top front side of the storage unit connects to an air supply duct 450 from an air intake system 400. In the embodiment, air duct 450 is provided by a wide diameter/low resistance duct that connects to an air intake 470 on the front side of the truck via filter 460 that is positioned in the front right end corner of the truck in front of the front wheels and below and outsides (in lateral direction) of the chassis beams.. A relatively large volume is occupied by such a dedicated (serviceable) filter unit to minimize the resistance to air flow through the filter itself. The spot in the right front bottom corner of the truck is beneficial to avoid clearance problems with other needed vehicle components. From this location on a channel system back up making the connection an air intake duct (connection with exterior) to a higher position integrated in top region of the front grille needs to be installed whilst avoiding resistance.

Figure 5B shows how air duct connects to the interface module 220 of the storage unit. In the interface module, additional arrangements may be provided to provide for water exhausts 455, hydrogen inlets, coolant tubing and high-voltage connections (not shown). Exemplary design rates for the air duct may be to provide for air flow rates up to 500 g/s at ambient temperature and atmospheric pressure. The main channel resistance will then be caused by an air filter, which may induce pressure differences up to 5 kPa (in end of service life state and despite the fairly large volume filter unit).

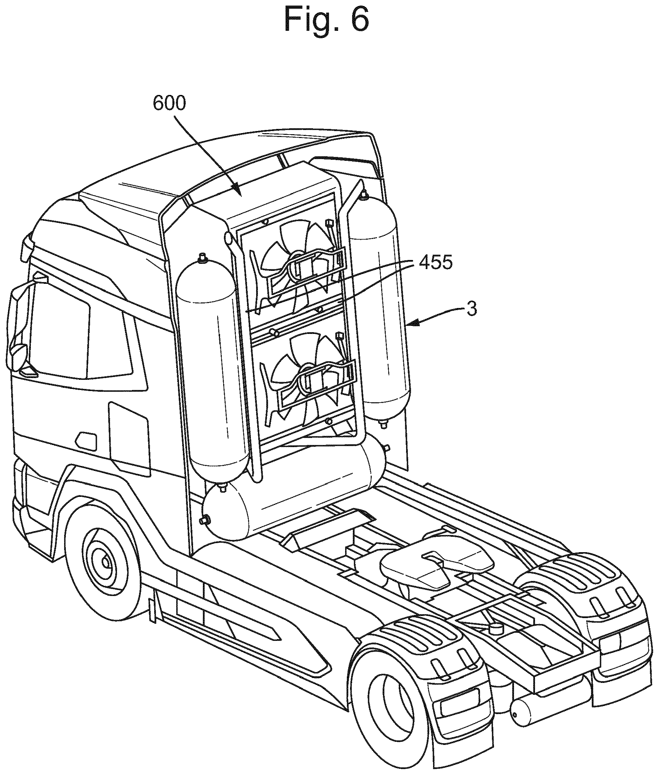

Figure 6 further shows a truck wherein the water drain duct 550 extends along the vertical elongated hydrogen vessels 3; preferably having the water drain duct integrated in a cowl 600 enclosing the vertical elongated hydrogen vessels.

It will be clear to the skilled person that the invention is not limited to any embodiment herein described and that modifications are possible which may be considered within the scope of the appended claims. Also kinematic inversions are considered inherently disclosed and can be within the scope of the invention. In the claims, any reference signs shall not be construed as limiting the claim. The terms 'comprising' and 'including' when used in this description or the appended claims should not be construed in an exclusive or exhaustive sense but rather in an inclusive sense. Thus expression as 'including' or 'comprising' as used herein does not exclude the presence of other elements, additional structure or additional acts or steps in addition to those listed. Furthermore, the words 'a' and 'an' shall not be construed as limited to 'only one', but instead are used to mean `at least one', and do not exclude a plurality. Features that are not specifically or explicitly described or claimed may additionally be included in the structure of the invention without departing from its scope. Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. To the extent that structure, material, or acts are considered to be essential they are inexpressively indicated as such. Additions, deletions, and modifications within the purview of the skilled person may generally be made without departing from the scope of the invention, as determined by the claims.

## Claims

1. A truck or tractor semi-trailer combination comprising an electrical driveline, an electric energy storage battery system, hydrogen storage system and a plurality of fuel cell devices, each fuel cell device comprising a charge generating portion (270); and one or more auxiliary portions (255) auxiliary to the charge generating portion, wherein the truck is provided with a pair of elongated chassis beams (20) extending along the length of the truck, wherein a storage space (100) is defined between the chassis beams (20); a front side member (230) laterally extending across the chassis beams (20); and a rear side cross beam; **characterized in that** at least one storage unit (200) is provided that houses a fuel cell device, said storage unit (200) comprising one or more mounts (130) for suspending said storage unit (200) relative to the chassis beams (20); and further comprising an interface module (220) for coupling an air supply duct (450), an hydrogen supply duct and a water drain duct (550), wherein the storage unit (200) has a top part (250) extending between the chassis beams (20) in said storage space (100); and a bottom part (260) extending below the chassis beams (20) and extending at least on one side laterally across the chassis beams (20).

2. A truck or tractor semi-trailer combination according to claim 1; wherein the storage unit (200) comprises at least one charge generating portion (270) shaped to at least extend partly in the storage unit top part, and wherein the auxiliary portions (255) are provided at least on one side of the charge generating fuel cell portion in the storage unit bottom part (260).

3. A truck or tractor semi-trailer combination according to any previous claim; wherein the storage unit (200) comprises at least one auxiliary fuel cell portion (255) shaped to at least extend partly in the storage unit top part (250), and wherein one or more charge generating portions (270) are provided in the storage unit bottom part (260).

4. A truck or tractor semi-trailer combination according to any previous claim; wherein a plurality of modular storage units are provided in said storage space (100); each mounted along a length of the storage space (100) extending along the chassis beams (20).

5. A truck or tractor semi-trailer combination according to any previous claim; wherein the storage space (100) is separated by a further cross beam provided between the chassis beams (20), wherein on each side of the cross beam in length direction a storage unit is suspended.

6. A truck or tractor semi-trailer combination according to any previous claim; wherein the storage space (100) is separated by a middle cross beam provided between the chassis beams, wherein a storage unit (200) is provided extending underneath the further cross beam.

7. A truck or tractor semi-trailer combination according to any previous claim, having one or more vertical elongated hydrogen vessels (34) supported near the front side cross beam.

8. A truck or tractor semi-trailer combination according to claim 7, wherein the water drain duct (550) extends along the vertical elongated hydrogen vessels (34).

9. A truck or tractor semi-trailer combination according to any previous claim wherein the interface module (220) is provided on a top front side of the storage unit (200) seen in the direction of the truck, substantially in a plane perpendicular to and having interface connections between the chassis beams (20).

10. A truck or tractor semi-trailer combination according to any preceding claim, wherein the air duct (450) is provided by a wide diameter/low resistance duct that connects to an air intake on the front side of the truck.

11. A truck or tractor semi-trailer combination according to any preceding claim, wherein at least three mounts (130, 131) are arranged to carry said storage unit (200), having at least two mounts in an extended lateral position on a storage unit front side, and at least one mount on a storage unit rear side.

12. A truck or tractor semi-trailer combination according to claim 11, wherein two mounts (130, 131) are provided in an extended lateral position on a storage unit front side, and two mounts (130, 131) are provided in an adjacent position on a storage unit rear side, wherein the storage unit (200) is elastically suspended by said mounts with a heave, pitch and roll eigenfrequency that is tuned to be distinct of the primary eigenfrequency of the rear axle unsprung mass.

13. A truck or tractor semi-trailer combination according to any preceding claim wherein the storage unit (200) is formed extending into said storage space (100) with an L-shape or an inverted T-shape.

14. A truck or tractor semi-trailer combination according to any previous claim, having one or more additional horizontal elongated hydrogen vessels (33) sideways of the chassis beams (20).

15. A truck or tractor semi-trailer combination according to any previous claim, further comprising one or more L-shaped brackets (22) each mounted to a chassis beam or cross member for providing a mount position below the chassis beam, said one or more L-shaped brackets (22) having a bottom leg that supports the mounts for suspending said storage unit (200) relative to the chassis beams or cross members.

## Patentansprüche

1. Lastkraftwagen oder Sattelzugkombination, mit: einem elektrischen Antriebsstrang, einem elektrischen Energiespeicher-Batteriesystem, einem Wasserstoffspeichersystem und einer Mehrzahl von Brennstoffzellenvorrichtungen, wobei jede Brennstoffzellenvorrichtung einen Ladungserzeugungsabschnitt (270) umfasst; und einen oder mehrere Hilfsabschnitte (255), die zu dem Ladungserzeugungsabschnitt hinzukommen, wobei der Lastkraftwagen mit einem Paar länglicher Chassisträger (20) versehen ist, die sich entlang der Länge des Lastkraftwagens erstrecken, wobei ein Lagerraum (100) zwischen den Chassisträgern (20) definiert ist; ein vorderes Seitenteil (230), das sich seitlich über die Chassisträger (20) erstreckt; und einen hinteren Seitenquerträger; **dadurch gekennzeichnet, dass** mindestens eine Lagereinheit (200) vorgesehen ist, die eine Brennstoffzellenvorrichtung beherbergt, wobei die Lagereinheit (200) eine oder mehrere Halterungen (130) zum Aufhängen der Lagereinheit (200) relativ zu den Chassisträgern (20) umfasst; und ferner ein Schnittstellenmodul (220) zum Koppeln eines Luftzufuhrkanals (450), eines Wasserstoffzufuhrkanals und eines Wasserabflusskanals (550) umfasst, wobei die Lagereinheit (200) einen oberen Teil (250), der sich zwischen den Chassisträgern (20) in dem besagten Lagerraum (100) erstreckt, und einen unteren Teil (260) aufweist, der sich unter den Chassisträgern (20) erstreckt und sich zumindest auf einer Seite seitlich über die Chassisträger (20) erstreckt.

2. Lastkraftwagen oder Sattelzugkombination nach Anspruch 1, wobei die Lagereinheit (200) mindestens einen Ladungserzeugungsabschnitt (270) umfasst, der so geformt ist, dass er sich zumindest teilweise im oberen Teil der Lagereinheit erstreckt, und wobei die Hilfsabschnitte (255) zumindest auf einer Seite des ladungserzeugenden Brennstoffzellenabschnitts im unteren Teil (260) der Lagereinheit vorgesehen sind.

3. Lastwagen oder Sattelzugkombination nach einem der vorhergehenden Ansprüche, wobei die Lagereinheit (200) mindestens einen Brennstoffzellenhilfsabschnitt (255) umfasst, der so geformt ist, dass er sich zumindest teilweise in den oberen Teil (250) der Lagereinheit erstreckt, und wobei ein oder mehrere Ladungserzeugungsabschnitte (270) im unteren Teil (260) der Lagereinheit vorgesehen sind.

4. Lastkraftwagen oder Sattelzugkombination nach einem der vorhergehenden Ansprüche, wobei in dem Lagerraum (100) mehrere modulare Lagereinheiten vorgesehen sind, die jeweils entlang einer Länge des Lagerraum (100) montiert sind, die sich entlang der Chassisträger (20) erstreckt.

5. Lastkraftwagen oder Sattelzugkombination nach einem der vorhergehenden Ansprüche, wobei der Lagerraum (100) durch einen weiteren Querträger, der zwischen den Chassisträgern (20) vorgesehen ist, abgetrennt wird, wobei an jeder Seite des Querträgers in Längsrichtung eine Lagereinheit aufgehängt ist.

6. Lastkraftwagen oder Sattelzugkombination nach einem der vorhergehenden Ansprüche, wobei der Lagerraum (100) durch einen zwischen den Chassisträgern vorgesehenen mittleren Querträger getrennt ist, wobei eine sich unter dem weiteren Querträger erstreckende Lagereinheit (200) vorgesehen ist.

7. Lastkraftwagen oder Sattelzugkombination nach einem der vorhergehenden Ansprüche, mit einem oder mehreren vertikalen, länglichen Wasserstoffbehältern (34), die in der Nähe des vorderen Querträgers angebracht sind.

8. Lastkraftwagen oder Sattelzugkombination nach Anspruch 7, wobei sich der Wasserabflusskanal (550) entlang der vertikalen, länglichen Wasserstoffbehälter (34) erstreckt.

9. Lastkraftwagen oder Sattelzugkombination nach einem der vorhergehenden Ansprüche, wobei das Schnittstellenmodul (220) an einer in Richtung des Lastkraftwagens gesehenen oberen Vorderseite der Lagereinheit (200) im Wesentlichen in einer Ebene senkrecht zu den Chassisträgern (20) vorgesehen ist und Schnittstellenverbindungen zwischen diesen aufweist.

10. Lastkraftwagen oder Sattelzugkombination nach einem der vorhergehenden Ansprüche, wobei der Luftzufuhrkanal (450) durch einen Kanal mit großem Durchmesser/geringem Widerstand gebildet wird, der mit einem Lufteinlass an der Vorderseite des Lastkraftwagens verbunden ist.

11. Lastkraftwagen oder Sattelzugkombination nach einem der vorhergehenden Ansprüche, wobei mindestens drei Halterungen (130, 131) so angeordnet sind, dass sie die besagte Lagereinheit (200) tragen, wobei mindestens zwei Halterungen in einer erstreckten seitlichen Position an der Vorderseite der Lagereinheit und mindestens eine Halterung an der Rückseite der Lagereinheit angeordnet sind.

12. Lastkraftwagen- oder Sattelzugkombination nach Anspruch 11, wobei zwei Halterungen (130, 131) in einer ausgefahrenen seitlichen Position an einer Lagereinheit-Vorderseite und zwei Halterungen (130, 131) in einer benachbarten Position an einer Lagereinheit-Hinterseite vorgesehen sind, wobei die Lagereinheit (200) elastisch aufgehängt ist durch die besagten Halterungen mit einer Hebe-, Nick- und Roll-Eigenfrequenz, die so abgestimmt ist, dass sie von der primären Eigenfrequenz der ungefederten Masse der Hinterachse verschieden ist.

13. Lastkraftwagen- oder Sattelzugkombination nach einem der vorhergehenden Ansprüche, wobei die Lagereinheit (200) so ausgebildet ist, dass sie sich in den besagten Lagerraum (100) mit einer L-Form oder einer umgekehrten T-Form erstreckt.

14. Lastkraftwagen- oder Sattelzugkombination nach einem der vorhergehenden Ansprüche, mit einem oder mehreren zusätzlichen horizontalen, länglichen Wasserstoffbehältern (33) seitlich der Chassisträger (20).

15. Lastwagen- oder Sattelzugkombination nach einem der vorhergehenden Ansprüche, die ferner einen oder mehrere L-förmige Winkel (22) umfasst, die jeweils an einem Chassisträger oder Querelement befestigt sind, um eine Befestigungsposition unterhalb des Chassisträgers zu schaffen, wobei der eine oder die mehreren L-förmigen Winkel (22) einen unteren Schenkel aufweisen, der die Halterungen zum Aufhängen der Lagereinheit (200) relativ zu den Chassisträgern oder Querelement trägt.

## Revendications

1. Combinaison de semi-remorque pour camion ou tracteur comprenant une chaîne cinématique électrique, un système de batterie de stockage d'énergie électrique, un système de stockage d'hydrogène et une pluralité de dispositifs de pile à combustible, chaque dispositif de pile à combustible comprenant une partie de génération de charge (270) ; et une ou plusieurs parties auxiliaires (255) auxiliaires à la partie de génération de charge, dans lequel le camion est équipé d'une paire de poutres de châssis allongées (20) s'étendant sur la longueur du camion, dans lequel un espace de stockage (100) est défini entre les poutres de châssis (20) ; d'un élément latéral avant (230) s'étendant latéralement à travers les poutres de châssis (20) ; et d'une poutre transversale latérale arrière ; **caractérisé en ce qu'**au moins une unité de stockage (200) est prévue qui abrite un dispositif de pile à combustible, ladite unité de stockage (200) comprenant un ou plusieurs supports (130) pour suspendre ladite unité de stockage (200) par rapport aux poutres de châssis (20) ; et comprenant en outre un module d'interface (220) pour coupler un conduit d'alimentation en air (450), un conduit d'alimentation en hydrogène et un conduit d'évacuation d'eau (550), dans lequel l'unité de stockage (200) a une partie supérieure (250) s'étendant entre les poutres de châssis (20) dans ledit espace de stockage (100) ; et une partie inférieure (260) s'étendant sous les poutres de châssis (20) et s'étendant au moins sur un côté latéralement à travers les poutres de châssis (20).

2. Combinaison de semi-remorque pour camion ou tracteur selon la revendication 1 ; dans lequel l'unité de stockage (200) comprend au moins une partie de génération de charge (270) formée pour s'étendre au moins partiellement dans la partie supérieure de l'unité de stockage, et dans lequel les parties auxiliaires (255) sont disposées au moins sur un côté de la partie de pile à combustible de génération de charge dans la partie inférieure (260) de l'unité de stockage.

3. Combinaison de semi-remorque pour camion ou tracteur selon l'une quelconque des revendications précédentes ; dans lequel l'unité de stockage (200) comprend au moins une partie de pile à combustible auxiliaire (255) formée pour s'étendre au moins partiellement dans la partie supérieure (250) de l'unité de stockage, et dans lequel une ou plusieurs parties de génération de charge (270) sont disposées dans la partie inférieure (260) de l'unité de stockage.

4. Combinaison de semi-remorque pour camion ou tracteur selon l'une quelconque des revendications précédentes ; dans lequel une pluralité d'unités de stockage modulaires sont disposées dans ledit espace de stockage (100) ; chacune étant montée sur une longueur de l'espace de stockage (100) s'étendant le long des poutres de châssis (20).

5. Combinaison de semi-remorque pour camion ou tracteur selon l'une quelconque des revendications précédentes ; dans lequel l'espace de stockage (100) est séparé par une autre poutre transversale disposée entre les poutres de châssis (20), dans lequel, de chaque côté de la poutre transversale dans la direction de longueur, une unité de stockage est suspendue.

6. Combinaison de semi-remorque pour camion ou tracteur selon l'une quelconque des revendications précédentes ; dans lequel l'espace de stockage (100) est séparé par une poutre transversale médiane disposée entre les poutres de châssis, dans lequel une unité de stockage (200) est disposée en s'étendant en dessous de l'autre poutre transversale.

7. Combinaison de semi-remorque pour camion ou tracteur selon l'une quelconque des revendications précédentes, ayant un ou plusieurs récipients d'hydrogène allongés verticaux (34) supportés proches de la poutre transversale côté avant.

8. Combinaison de semi-remorque pour camion ou tracteur selon la revendication 7, dans lequel le conduit d'évacuation d'eau (550) s'étend le long des récipients d'hydrogène allongés verticaux (34).

9. Combinaison de semi-remorque pour camion ou tracteur selon l'une quelconque des revendications précédentes, dans lequel le module d'interface (220) est disposé sur un côté avant supérieur de l'unité de stockage (200) observée dans la direction du camion, sensiblement dans un plan perpendiculaire aux poutres de châssis (20), et ayant des connexions d'interface entre celles-ci.

10. Combinaison de semi-remorque pour camion ou tracteur selon l'une quelconque des revendications précédentes, dans lequel le conduit d'air (450) est assuré par un conduit de large diamètre/faible résistance qui se connecte à une admission d'air sur le côté avant du camion.

11. Combinaison de semi-remorque pour camion ou tracteur selon l'une quelconque des revendications précédentes, dans lequel au moins trois supports (130, 131) sont agencés pour porter ladite unité de stockage (200), ayant au moins deux supports dans une position latérale étendue sur un côté avant de l'unité de stockage, et au moins un support sur un côté arrière de l'unité de stockage.

12. Combinaison de semi-remorque pour camion ou tracteur selon la revendication 11, dans lequel deux supports (130, 131) sont disposés dans une position latérale étendue sur un côté avant de l'unité de stockage, et deux supports (130, 131) sont disposés dans une position adjacente sur un côté arrière de l'unité de stockage, dans lequel l'unité de stockage (200) est suspendue élastiquement par lesdits supports avec une fréquence propre de poussée, de tangage et de roulis qui est accordée pour être distincte de la fréquence propre principale de la masse non suspendue de l'essieu arrière.

13. Combinaison de semi-remorque pour camion ou tracteur selon l'une quelconque des revendications précédentes, dans lequel l'unité de stockage (200) est formée en s'étendant dans ledit espace de stockage (100) avec une forme de L ou une forme de T inversé.

14. Combinaison de semi-remorque pour camion ou tracteur selon l'une quelconque des revendications précédentes, ayant un ou plusieurs récipients d'hydrogène allongés horizontaux supplémentaires (33) sur le côté des poutres de châssis (20).

15. Combinaison de semi-remorque pour camion ou tracteur selon l'une quelconque des revendications précédentes, comprenant en outre un ou plusieurs étriers en forme de L (22) montés chacun sur une poutre de châssis ou un élément transversal pour fournir une position de montage sous la poutre de châssis, lesdits un ou plusieurs étriers en forme de L (22) ayant un pied inférieur qui supporte les supports pour suspendre ladite unité de stockage (200) par rapport aux poutres de châssis ou aux éléments transversaux.
